# EUROPEAN PATENT APPLICATION

(11) **EP 4 752 620 A1**
(43) Date of publication of application: **03.06.2026**
(21) Application number: 25220047.2
(22) Date of filing: 02.12.2025
(51) Int. Cl.: G02B 21/00, G01J 3/44, G01N 21/65, G02B 21/24, G02B 7/28

(54) **LASER RAMAN MICROSCOPE AND APPARATUS THEREOF**

(30) Priority: 02.12.2024 JP 2024209723
(71) Applicant: Jasco Corporation, Hachioji-shi Tokyo 192-8537 (JP)
(72) Inventor: SOEJIMA, Takeo, Hachioji-shi, Tokyo, 1928537 (JP); USUKI, Masateru, Hachioji-shi, Tokyo, 1928537 (JP); AKAO, Yoshiko, Hachioji-shi, Tokyo, 1928537 (JP); AIZAWA, Kento, Hachioji-shi, Tokyo, 1928537 (JP)
(74) Representative: Michalski Hüttermann & Partner Patentanwälte mbB

(57) **Abstract**

In a laser Raman microscope, a monochromatic excitation light beam emitted by a laser oscillator is reflected by an alignment mirror, transmitted through a first beam splitter, reflected by a rejection filter, and irradiates a sample via an objective lens. The monochromatic excitation light beam propagates backward to and is reflected by the first beam splitter, and enters an AF control unit. Here, the positional deviation between the focus of the objective lens and the sample is corrected. Raman-scattered light scattered by the sample is guided to a spectrometer, and the spectrometer spectrally resolves the Raman-scattered light. A detector detects the spectrally resolved light. Illumination light from an illumination lamp irradiates the sample through a movable reflecting mirror disposed in an optical path of scattered light transmitted through the rejection filter, and an observation camera images reflected light representing the surface shape of the sample.

## Description

### CROSS REFERENCES TO RELATED APPLICATIONS

The present invention contains subject matter related to Japanese Patent Application No. 2024-209723 filed in the Japan Patent Office on December 2, 2024.

### BACKGROUND OF THE INVENTION

### 1. Field of the Invention

The present invention relates to a laser Raman microscope and apparatus thereof.

### 2. Description of the Related Art

A laser Raman microscope is configured with a confocal optical system and selectively measures a spectrum at a focal position on a sample. When a measurement position deviates from a focal point, the spectral intensity may decrease or the spectrum at a target position may not be measured. In mapping measurement, measurement is performed while moving a stage in the X and/or Y directions. In the case where a sample has unevenness or inclination, and the Z position serving as a focus varies depending on the location, a favorable spectrum cannot be obtained over the entire surface of the sample by mapping measurement at only a single Z position. Thus, a method is employed in which autofocus (hereinafter also referred to as "AF") is performed that automatically adjusts a focal position each time a stage is moved in the X or Y direction.

As AF methods, a method using image contrast and a method using excitation laser light used for measuring Raman-scattered light (laser AF) are employed. In the case of using image contrast, illumination light that irradiates a sample becomes an obstacle to measurement of Raman-scattered light, and thus, AF cannot be performed during the measurement. In addition, a mirror-surface sample has little change in contrast at different focal positions, and thus, AF using image contrast cannot be performed. In contrast, laser AF can be performed simultaneously with measurement of Raman-scattered light and can also be applied to a mirror-surface sample.

See, for example, Japanese Unexamined Patent Application Publication No. 2004-251984, U.S. Patent No. 10,067,058 B1, and Japanese Patent No. 5792792).

### SUMMARY OF THE INVENTION

In an AF method utilizing excitation laser light, a mask that blocks laser light is typically placed upstream of a sample. In this case, however, there has been a problem in that the intensity of the laser light that irradiates the sample is attenuated, and the sensitivity of Raman-scattered light decreases.

A laser Raman microscope is configured with a confocal optical system and selectively measures a spectrum at a focal position on a sample. However, when a measurement position deviates from a focal point, the spectral intensity may decrease, or the spectrum at a target position may not be measured.

In mapping measurement, measurement is performed while moving a stage in the X and/or Y directions. In the case where a sample has unevenness or inclination, and the Z position serving as a focus varies depending on the location, a favorable spectrum cannot be obtained over the entire surface of the sample by mapping measurement at only a single Z position. Thus, a method is employed in which autofocus is performed that automatically adjusts a focal position each time a stage is moved in the X or Y direction.

Laser light irradiating the sample is recollected by an objective lens as Rayleigh-scattered light. If the Rayleigh-scattered light directly enters an observation camera, the camera may be damaged by the intense light. As a countermeasure, the intensity of light that enters the observation camera is reduced by a filter. However, there has been a problem in that the number of filters in the entire apparatus increases by providing such a filter for the camera.

In Raman measurement, it is important to use an excitation wavelength suitable for a sample. When a type of laser is changed, thereby changing the excitation wavelength, the optical axis of light entering the objective lens may deviate, causing an imaging position on a detector to change, or causing the focal position of an imaging lens to change due to chromatic aberration. A laser AF mechanism that corresponds to a change in laser wavelength has not been available.

The present invention has been made in view of the above-described problems, and an object of the present invention is to provide a laser Raman microscope and an apparatus thereof that are capable of measuring, by using a plurality of laser oscillators, a sample with a focal position adjusted by applying autofocus (laser AF), capable of allowing a monochromatic excitation light beam that is not attenuated by an AF control unit to be incident on the sample such that strong Raman-scattered light or the like can enter a spectrometer, thereby enabling measurement with higher accuracy than in the related art, capable of brightly irradiating the sample with illumination light in a manner that is switchable with measurement of Raman-scattered light or the like, and capable of applying the AF control unit even during observation, thereby enabling observation with the focal position adjusted without allowing intense light to enter and damage an observation camera. However, in a generalized sense, the present invention may have as its object to solve the problem that, irrespective of whether a single or a plurality of laser oscillators is used, the laser intensity irradiated to the sample is reduced and the sensitivity of Raman scattered light is lowered.

A laser Raman microscope according to a first aspect of the present application has the following configuration in order to solve the above problems. The laser Raman microscope includes: a plurality of laser oscillators that emit monochromatic excitation light beams of different wavelengths; an alignment mirror that is disposed in such a manner as to intersect an optical path at a predetermined angle and that finely adjusts an optical path of the monochromatic excitation light beams emitted from the plurality of laser oscillators, the monochromatic excitation light beams being incident upon and reflected by the alignment mirror; a first beam splitter that is disposed in such a manner as to intersect, at a predetermined angle, an optical path of at least one of the monochromatic excitation light beams reflected by the alignment mirror; a plurality of rejection filters each of which is to be disposed at a predetermined position to intersect, at a predetermined angle, an optical path located downstream of the first beam splitter, the plurality of rejection filters each having a predetermined high reflectance corresponding to a wavelength of the monochromatic excitation light beam emitted from a respective one of the plurality of laser oscillators; an objective lens that is disposed along an optical path of at least one of the monochromatic excitation light beams reflected by a respective one of the rejection filters; a composite stage device including an XY stage and a Z stage combined together; an autofocus (AF) control unit that is disposed in a reflection direction, the AF control unit being configured to perform necessary computation to calculate a positional deviation between a focus of the objective lens and a sample and configured to move the Z stage up or down to correct the positional deviation; a spectrometer into which Rayleigh-scattered light and Raman-scattered light included in light from the sample, the light being transmitted through at least one of the rejection filters upon incidence of at least one of the monochromatic excitation light beams on the sample, are guided, the spectrometer being configured to spectrally resolve at least the Raman-scattered light; a detector that detects spectrally resolved light; a movable reflecting mirror that is disposed in an optical path of the Rayleigh-scattered light and the Raman-scattered light transmitted through at least one of the rejection filters, the movable reflecting mirror being switchable between a state of intersecting the optical path at a predetermined angle during observation of a surface of the sample and a state of being retracted from the optical path during non-observation; a second beam splitter; an illumination lamp that emits illumination light for observation of the surface of the sample, the illumination lamp being configured to emit the illumination light such that the illumination light is reflected by the second beam splitter and by the movable reflecting mirror, is transmitted through at least one of the rejection filters and the objective lens, and irradiates the sample; an observation camera that images reflected light, the reflected light being the illumination light reflected by the sample, representing a shape or color of the surface of the sample, and having propagated backward to the second beam splitter and having been transmitted therethrough; and a personal computer (PC) that performs overall required control of an apparatus. At least one of the monochromatic excitation light beams reflected by the alignment mirror is transmitted through the first beam splitter, is reflected by a respective one of the rejection filters in a direction in which the sample is irradiated with the monochromatic excitation light beam, and converges beyond the objective lens to be collected onto and irradiate the sample placed on the XY stage in focus. At least one of the monochromatic excitation light beams reflected by or scattered at the sample is reflected by a respective one of the rejection filters, propagates backward to the first beam splitter, and is reflected by the first beam splitter to enter the AF control unit. One laser oscillator selected from among the plurality of laser oscillators is configured to emit a respective one of the monochromatic excitation light beams. The plurality of rejection filters are in a one-to-one correspondence with the laser oscillators, and one of the plurality of rejection filters corresponding to the one laser oscillator is selected, the selected rejection filter being configured to be alternately moved to the predetermined position.

In the present invention, the above control may be made possible by providing a connection port for the above PC (located externally) in the laser Raman microscope according to the above embodiment, or the present invention may be realized as another embodiment that is a laser Raman microscope device (system) that includes the PC (same below).

According to a second aspect of the present application, in the first aspect described above, the plurality of laser oscillators may be fixedly arranged, and the monochromatic excitation light beam emitted from a selected one of the plurality of laser oscillators may be incident on the alignment mirror along a common optical path via a plurality of mirrors.

According to a third aspect of the present application, in the first aspect described above, the plurality of laser oscillators may be arranged on a movable table. One of the plurality of laser oscillators may be selected by scanning the movable table and may be moved to an emission position. The monochromatic excitation light beam emitted from the selected laser oscillator may be incident on the alignment mirror along a common optical path.

According to a fourth aspect of the present application, in any one of the first to the third aspects described above, the AF control unit may be configured to calculate a positional deviation between the focus of the objective lens and the sample by using any one of a pupil-splitting method, a knife-edge method, a pinhole method based on optical path difference, a Foucault method, a critical-angle method, a phase-difference method, and an astigmatism method.

According to a fifth aspect of the present application, in the fourth aspect described above, the AF control unit may include a blade, a lens, a detector, a calculation unit, and a motor driver. The blade may partially block a light beam. The calculation unit may perform necessary computation based on a detection position of at least one of the monochromatic excitation light beams on the detector to calculate a positional deviation between the focus of the objective lens and the sample. The Z stage may be driven by the motor driver to move up or down to correct the positional deviation.

According to a sixth aspect of the present application, in any one of the first to the fifth aspects described above, the spectrometer may be configured to spectrally resolve the Raman-scattered light using a diffraction grating, a filter, or Fourier transform.

According to a seventh aspect of the present application, the laser Raman microscope according to any one of the first to the sixth aspects may further include means for controlling a distance between the sample and the objective lens, the means being separate from the AF control unit and capable of complementing a control range of the AF control unit.

According to each aspect of the present invention, a laser Raman microscope can be provided that is capable of performing, by using a plurality of laser oscillators, measurement with a focal position adjusted by applying autofocus (laser AF), capable of allowing a monochromatic excitation light beam that is not attenuated by an AF control unit to be incident on a sample such that strong Raman-scattered light or the like can enter a spectrometer, thereby enabling measurement with higher accuracy than in the related art, capable of brightly irradiating the sample with illumination light in a manner that is switchable with measurement of Raman-scattered light or the like, and capable of applying the AF control unit even during observation, thereby enabling observation with the focal position adjusted without allowing intense light to enter and damage an observation camera.

### BRIEF DESCRIPTION OF THE DRAWINGS

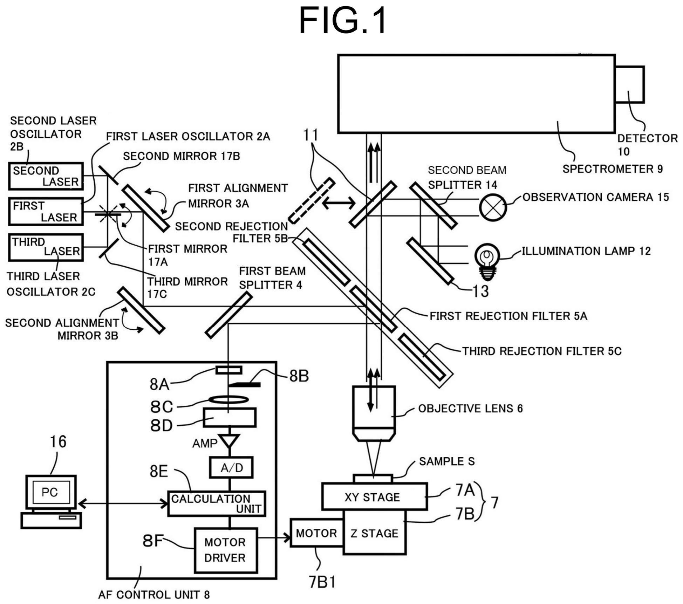

Fig. 1 is a schematic diagram illustrating a configuration of a laser Raman microscope according to an embodiment of the present invention.

### DESCRIPTION OF THE PREFERRED EMBODIMENTS

A laser Raman microscope according to one embodiment of the present invention will be described below with reference to the drawings.

A laser Raman microscope 1 according to an embodiment of the present invention, which is illustrated in Fig. 1, has the following configuration.

In the laser Raman microscope 1, a personal computer (PC) 16 performs overall required control of an apparatus. Note that, in Fig. 1, the PC 16 is illustrated as being connected to a calculation unit 8E for convenience of description.

As illustrated in Fig. 1, the laser Raman microscope 1 according to the present embodiment includes a plurality of laser oscillators that are, for example, first, second, and third laser oscillators 2A, 2B, and 2C, and one of these laser oscillators 2A, 2B, and 2C is to be selected so as to emit a monochromatic excitation light beam of a required wavelength. The wavelength of the monochromatic excitation light beam is selected, for example, from 457 nm (blue laser), 532 nm (green laser), 785 nm (near-infrared laser), or 1064 nm (near-infrared laser), depending on an analysis target or purpose. In particular, an optimal wavelength is selected depending on a specific application or the characteristics of a sample. The PC 16 selects one of the laser oscillators and performs control required for emission of the monochromatic excitation light beam. It is to be noted that, hereinafter, strictly speaking, each of the first, second, and third laser oscillators 2A, 2B, and 2C may be designated as a "laser oscillator unit," and an aggregate of the first, second, and third laser oscillator units 2A, 2B, and 2C may collectively be designated as a "laser oscillator."

First, second, and third rejection filters 5A, 5B, and 5C are each set to have a high reflectance (e.g., reflectance of 90%) corresponding to the wavelength of the monochromatic excitation light beam emitted from a respective one of the first, second, and third laser oscillators 2A, 2B, and 2C. One of the first, second, and third rejection filters 5A, 5B, and 5C is selected, corresponding to the selection of one of the first, second, and third laser oscillators 2A, 2B, and 2C, and is exchangeably disposed at a predetermined position to reflect the monochromatic excitation light beam such that the monochromatic excitation light beam irradiates a sample S. Note that each of the rejection filters may be a notch filter or a dichroic mirror. It should be noted that in the following description, strictly speaking, each of the first, second, and third rejection filters 5A, 5B, and 5C may be designated as a "rejection filter unit," and an aggregate of the first, second, and third rejection filters 5A, 5B, and 5C may collectively be designated as a "rejection filter."

The first, second, and third laser oscillators 2A, 2B, and 2C are in a one-to-one correspondence with the first, second, and third rejection filters 5A, 5B, and 5C, and the selected rejection filter is exchangeably moved to the predetermined position. Regarding the configuration in which the plurality of rejection filters are exchangeably moved, in Fig. 1 although the first, second, and third rejection filters 5A, 5B, and 5C are arranged on a movable table that slides at a 45-degree angle to the left, they may be arranged on a movable table that slides in a direction perpendicular to the plane of Fig. 1 or may be movably arranged on a table that slides at a 45-degree angle to the right. In addition, the movable table may be a turntable.

The monochromatic excitation light beam that is reflected by a respective one of the rejection filters is collected by an objective lens 6 so as to irradiate the sample S placed at a focal position. The first, second, and third rejection filters 5A, 5B, and 5C are arranged on the movable table, and the movable table operates based on an instruction and/or control from the PC 16, so that one of the rejection filters is brought to the predetermined position and thus selected.

The monochromatic excitation light beam emitted by the selected laser oscillator is reflected by one or two of mirrors 17A, 17B, and 17C, reflected by first and second alignment mirrors 3A and 3B, further transmitted through a first beam splitter 4, and is incident on a respective one of the rejection filters, which is exchangeably arranged (selected) at the predetermined position. The first and second alignment mirrors 3A and 3B have a function of preventing a decrease in spectral intensity or a failure to measure the spectrum at a target position that would occur if the monochromatic excitation light beam deviates from the optical axis, causing a shift of the focus on the sample S.

The monochromatic excitation light beam that is reflected by or scattered at the sample S is transmitted through the objective lens 6, reflected by the rejection filter 5 so as to propagate backward to the first beam splitter 4, is reflected by the first beam splitter 4, and enters an autofocus (AF) control unit 8. The AF control unit 8 performs necessary computation, based on the monochromatic excitation light beam entering the AF control unit 8, to calculate a positional deviation between the focus of the objective lens 6 and the sample S, and controls a Z stage 7B to move up or down by driving a motor 7B1 of the Z stage 7B so as to correct the positional deviation. Consequently, the focal position is adjusted such that the sample S coincides with the focal length of the objective lens 6.

Upon irradiation of the sample S with the monochromatic excitation light beam, Rayleigh-scattered light and Raman-scattered light are generated from the sample S. The Rayleigh-scattered light and the Raman-scattered light, together with the monochromatic excitation light beam reflected from the sample S, fluorescence, and photoluminescence, are transmitted through the rejection filter 5 and enter a spectrometer 9. The spectrometer 9 spectrally resolves the Raman-scattered light and blocks other light. A detector 10 detects the spectrally resolved Raman-scattered light. Note that the spectrometer 9 may be configured to have a function of not only spectrally resolving the Raman-scattered light but also spectrally resolving the Rayleigh-scattered light, fluorescence, and photoluminescence, and the detector 10 also detects the spectrally resolved Rayleigh-scattered light, fluorescence, and photoluminescence.

A movable reflecting mirror 11 is disposed in an optical path between the rejection filters 5 and the spectrometer 9. Illumination light from an illumination lamp 12 is reflected by a second beam splitter 14 and by the movable reflecting mirror 11, is transmitted through one of the rejection filters 5 and the objective lens 6, and is incident on the sample S. Reflected light from the sample S represents the shape and color of a surface of the sample S. The reflected light propagates backward to the second beam splitter 14, is transmitted through the second beam splitter 14, and is imaged by an observation camera 15.

Further details will be described below.

The monochromatic excitation light beam emitted from the laser oscillator selected from among the first, second, and third laser oscillators 2A, 2B, and 2C is incident on the first alignment mirror 3A along a common optical path via at least one of the first, second, and third mirrors 17A, 17B, and 17C, or directly from the laser oscillator onto the first alignment mirror 3A.

In the case where the first laser oscillator 2A is selected, the monochromatic excitation light beam emitted therefrom is not blocked by the first mirror 17A, which is a movable mirror disposed parallel to the optical path, and is successively reflected by the first alignment mirror 3A and the second alignment mirror 3B.

In the case where the second laser oscillator 2B is selected, the monochromatic excitation light beam emitted therefrom is reflected by the second mirror 17B, which is a fixed mirror disposed to intersect the optical path at a predetermined angle (45°), further reflected by the first mirror 17A having an orientation changed by 45° to intersect the optical path at a predetermined angle (45°), and successively reflected by the first and second alignment mirrors 3A and 3B.

In the case where the third laser oscillator 2C is selected, the monochromatic excitation light beam emitted therefrom is reflected by the third mirror 17C, which is a fixed mirror disposed to intersect the optical path at a predetermined angle (135°), further reflected by the first mirror 17A having an orientation changed by 90°, and successively reflected by the first and second alignment mirrors 3A and 3B.

Note that the first and second alignment mirrors 3A and 3B can finely adjust the direction of reflection in a pivotable manner based on an instruction and/or control from the PC 16, and have a function of finely adjusting the optical axes, which vary when the selection is switched among the first, second, and third laser oscillators 2A, 2B, and 2C, to bring them into coaxial alignment.

As a first alternative embodiment, the laser Raman microscope 1 may be configured such that, when one of the first, second, and third laser oscillators 2A, 2B, and 2C is selected, the monochromatic excitation light is incident on the first alignment mirror 3A along the common optical path without passing through the first, second, or third mirrors 17A, 17B, or 17C. More specifically, the first, second, and third laser oscillators 2A, 2B, and 2C may be arranged on a movable table, and the movable table may be moved based on an instruction and/or control from the PC 16, so that one of the laser oscillators is brought to a predetermined position and thus selected. The monochromatic excitation light beam emitted from the selected laser oscillator may be directly incident on the first alignment mirror 3A. In place of the above, alternatively, as a second alternative embodiment, while maintaining the configuration shown in Fig. 1 in which the laser oscillators are arranged in the order of 2B, 2A, and 2C from the top in the drawing, the first mirror 17A may be a single or plural mirror mechanism having a fixed, constant angle without being angle-variable, and the first mirror 17A may be configured such that a mirror having a different angle is inserted by a slide-in mechanism that allows sliding, for example, in a direction toward and away from the front of the paper (into and out of the drawing). In this second alternative embodiment, when the first laser oscillator 2A is selected, a monochromatic excitation light beam oscillated by the first laser oscillator 2A may be made incident directly on the first alignment mirror 3A not via a mirror, when the second laser oscillator 2B is selected, a monochromatic excitation light beam oscillated by the second laser oscillator 2B may be reflected by the second mirror 17B to change direction by 90°, and then reflected by the first mirror 17A, which is slid in and disposed at a position intersecting the optical path at a second angle (for example, 45° with respect to the optical path), so as to be incident on the first alignment mirror 3A, and when the third laser oscillator 2C is selected, a monochromatic excitation light beam oscillated by the third laser oscillator 2C may be reflected by the third mirror 17C to change direction by 90°, and then reflected by the first mirror 17A, which is slid in and disposed at a position intersecting the optical path at a third angle (for example, 135° with respect to the optical path), so as to be incident on the first alignment mirror 3A. Furthermore, in place of these, as a third alternative embodiment, in the configuration shown in Fig. 1, the laser oscillators are arranged in a changed order of 2A, 2B, and 2C from the top in the drawing, the first mirror 17A ,the second mirror 17B and the third mirror 17C may be a mirror mechanism having a fixed, constant angle (for example, 45° with respect to the optical path), and the second mirror 17B and the third mirror 17C may be configured such that, by a slide-in mechanism that allows sliding, for example, in a direction toward and away from the front of the paper (into and out of the drawing), it is inserted at different positions corresponding to the one selected from among the first, second, and third laser oscillators 2A, 2B, and 2C. In this third alternative embodiment, when the first laser oscillator 2A is selected, a monochromatic excitation light beam that travels along a first optical path from the first laser oscillator 2A is reflected by the first mirror 17A having the above angle, changes direction by 90°, travels along the optical path, and is incident on the second alignment mirror 3B located on the extension of the optical path. In this case, the first alignment mirror 3A is unnecessary, and the second alignment mirror 3B is disposed, to the left of the position shown in Fig. 1, on the optical path along which the monochromatic excitation light beam has been reflected by the first mirror 17A and its direction has been changed by 90°. In this third alternative embodiment, when the second laser oscillator 2B is selected, a monochromatic excitation light beam that travels along a second optical path from the second laser oscillator 2B is reflected by the second mirror 17B slid into a second position on the second optical path while having the above angle, changes direction by 90°, travels along the optical path, and is incident on the second alignment mirror 3B located on the extension of the optical path, and when the third laser oscillator 2C is selected, a monochromatic excitation light beam that travels along a third optical path from the third laser oscillator 2C is reflected by the third mirror 17C slid into a third position on the third optical path while having the above angle, changes direction by 90°, travels along the optical path, and is incident on the second alignment mirror 3B located on the extension of the optical path.

The monochromatic excitation light beam emitted by the first laser oscillator 2A, the second laser oscillator 2B, or the third laser oscillator 2C is successively reflected by the first and second alignment mirrors 3A and 3B, is transmitted through the first beam splitter 4, which is disposed at a predetermined position along the subsequent optical path so as to intersect the optical path at a predetermined angle (45°), and is further reflected at a high reflectance (e.g., reflectance of 90%) by one of the first rejection filter 5A, the second rejection filter 5B, and the third rejection filter 5C, each of which is exchangeably arranged at predetermined positions along the subsequent optical path so as to intersect the optical path at a predetermined angle (45°) and so as to correspond to a respective one of the laser oscillators 2A, 2B, and 2C, so that the monochromatic excitation light beam irradiates the sample S placed on a composite stage device 7.

The composite stage device 7 includes an XY stage 7A and the Z stage 7B combined together. The Z stage 7B causes the XY stage 7A to move up and down. The XY stage 7A operates to move an observation point of the sample S based on an instruction and/or control from the PC 16. The Z stage 7B operates to move in the vertical direction based on an instruction and/or control from the AF control unit 8 so as to align the focus of the objective lens 6 with the sample S.

The light scattered or reflected by the sample S propagates backward to the first beam splitter 4, is reflected by the first beam splitter 4, and enters the AF control unit 8 disposed in a reflection direction.

After reducing the light intensity of the monochromatic excitation light beam, the AF control unit 8 performs necessary computation to calculate a positional deviation between the focus of the objective lens 6 and the sample S, and moves the Z stage 7B up or down so as to correct the positional deviation.

The AF control unit 8 includes, for example, an attenuator 8A, a blade 8B, a lens 8C, a detector 8D, the calculation unit 8E, and a motor driver 8F. The attenuator 8A reduces light intensity. The blade 8B partially blocks a light beam. The lens 8C collects light onto the detector 8D. The calculation unit 8E performs necessary computation, based on a detection position of the monochromatic excitation light beam on the detector 8D, to calculate a positional deviation between the focus of the objective lens 6 and the sample S. Then, the motor driver 8F drives the 2 stage 7B to move up or down so as to correct the positional deviation. Note that a split photodiode (PD), a line sensor, a PSD sensor, or a two-dimensional sensor (CCD or CMOS) can be used as the detector 8D.

The calculation unit 8E of the AF control unit 8 calculates the positional deviation between the focus of the objective lens 6 and the sample S by using any one of a pupil-splitting method, a knife-edge method, a pinhole method based on optical path difference, a Foucault method, a critical-angle method, a phase-difference method, and an astigmatism method.

Note that means for controlling a distance between the sample and the objective lens 6, the means being capable of complementing a control range of the AF control unit, may be provided separately from the AF control unit 8. In other words, laser AF control has a range of distances within which the laser AF control can operate normally, and attempting to operate the laser AF control beyond the range may cause the laser AF control to malfunction and may result in a collision between the objective lens 6 and the sample S. As means for complementing this, it is preferable to provide distance-controlling means separate from the laser AF control. The distance-controlling means may be a camera for laterally imaging a sample placed on a sample stage (side observation), may use an image captured by the observation camera 15, or may be based on distance measurement using a laser beam. The distance-controlling means is not particularly limited.

In addition, upon incidence of the monochromatic excitation light beam on the sample S, a portion of the Rayleigh-scattered light and the Raman-scattered light scattered from the sample S are transmitted through the first rejection filter 5A. The Rayleigh-scattered light and the Raman-scattered light enter the spectrometer 9.

The spectrometer 9 spectrally resolves the Raman-scattered light, and the detector 10 detects the spectrally resolved light. The detector 10 may be, for example, a CCD detector or an InGaAs detector.

The spectrometer 9 may include, for example, a reflecting mirror, an aperture, a rejection filter, a lens, and a spectroscopic section and may be configured to spectrally resolve Raman-scattered light. Specifically, the spectrometer may be configured to spectrally resolve the Raman-scattered light using any one of a diffraction grating, a filter, or Fourier transform.

The movable reflecting mirror 11 is disposed along the optical path of the Rayleigh-scattered light and the Raman-scattered light between the first rejection filter 5A and the spectrometer 9. The movable reflecting mirror 11 is supported on a movable table that is moved based on a control command output from the PC 16. The movable reflecting mirror 11 is switched, by movement of the movable table, between a state of intersecting the optical path at a predetermined angle during observation of the surface of the sample S and a state of being retracted from the optical path during non-observation.

There is provided the illumination lamp 12 that emits illumination light for observation of the surface of the sample S, the illumination lamp 12 being configured to emit the illumination light such that the illumination light is reflected by a mirror 13 disposed to intersect the optical path at a 45° angle, by the second beam splitter 14, and by the movable reflecting mirror 11, is transmitted through one of the rejection filters 5 and the objective lens 6, and irradiates the sample S. In addition, there is provided the observation camera 15 that images reflected light, the reflected light being the illumination light reflected by the sample S, representing the shape and color of the surface of the sample S, and having propagated backward to the second beam splitter 14 and having been transmitted therethrough.

When the laser Raman microscope 1 uses an image captured by a camera for focal alignment to adjust the focal length of the objective lens 6 to the surface of the sample S, an image appearing on the camera is subjected to image processing.

According to the laser Raman microscope of one embodiment of the present invention, by using a plurality of laser oscillators that emit monochromatic excitation light beams of different wavelengths, autofocus (laser AF) can be applied when measuring a sample, and the measurement can be performed with a focal position adjusted. In addition, since each of the monochromatic excitation light beams enters an AF control unit after being incident on the sample, the laser light from each of the laser oscillators is incident on the sample with high efficiency. This allows Raman-scattered light to enter a spectrometer without being attenuated, enabling the spectrum of the Raman-scattered light to be measured with higher accuracy than in the related art. Furthermore, by providing a movable reflecting mirror disposed downstream of a rejection filter, the sample can be irradiated with illumination light from an illumination lamp in a manner that is switchable with measurement of Raman-scattered light. Thus, the Raman-scattered light from the sample is incident on a Raman spectroscopic section with high efficiency during Raman spectroscopy. During observation of the sample, although some of the Rayleigh-scattered light and Raman-scattered light from the sample enter an observation camera, bright and clear observation of the sample can be performed because a filter for attenuation is not used at a position immediately upstream of the observation camera. Moreover, Rayleigh-scattered light strong enough to damage the camera is not incident on the camera even without using a filter for attenuation. In addition, laser AF can also be applied during observation, enabling bright observation with a focal position adjusted. Note that, if the spectrometer has a function of not only spectrally resolving the Raman-scattered light but also spectrally resolving Rayleigh-scattered light, fluorescence, and photoluminescence, measurement can be performed with higher accuracy than in the related art, similarly to Raman spectroscopy.
FIG. 1
2A: FIRST LASER OSCILLATOR
3A: FIRST ALIGNMENT MIRROR
4: FIRST BEAM SPLITTER
5B: SECOND REJECTION FILTER
6: OBJECTIVE LENS
8: AF CONTROL UNIT
8E: CALCULATION UNIT
8F: MOTOR DRIVER
9: SPECTROMETER
10: DETECTOR
12: ILLUMINATION LAMP
15: OBSERVATION CAMERA
S: SAMPLE

## Claims

1. A laser Raman microscope apparatus comprising:
a laser oscillator that emits monochromatic excitation light beam;
an alignment mirror that is disposed in such a manner as to intersect an optical path at a predetermined angle and that finely adjusts an optical path of the monochromatic excitation light beam emitted from the laser oscillator, the monochromatic excitation light beam being incident upon and reflected by the alignment mirror;
a first beam splitter that is disposed in such a manner as to intersect, at a predetermined angle, the optical path of the monochromatic excitation light beam reflected by the alignment mirror;
a rejection filter which is to be disposed at a predetermined position to intersect, at a predetermined angle, an optical path located downstream of the first beam splitter, the rejection filter having a predetermined high reflectance corresponding to a wavelength of the monochromatic excitation light beam emitted from the laser oscillator wherein the monochromatic excitation light beam reflected by the alignment mirror is transmitted through the first beam splitter, is reflected by the rejection filter in a direction in which a sample is irradiated with the monochromatic excitation light beam;
an objective lens that is disposed along an optical path of the monochromatic excitation light beam reflected by the rejection filter, the objective lens collecting the monochromatic excitation light beam reflected by the rejection filter irradiating the monochromatic excitation light beam onto the sample positioned at a focal point;
a composite stage device on which the sample is positioned, the composite stage device including an XY stage and a Z stage;
an autofocus (AF) control unit which is configured to perform necessary computation to calculate a positional deviation between a focus of the objective lens and the sample and configured to move the Z stage up or down to correct the positional deviation;
a spectrometer into which Rayleigh-scattered light and Raman-scattered light included in light from the sample are guided, the light being transmitted through the rejection filter upon incidence of the monochromatic excitation light beam on the sample, the spectrometer being configured to spectrally resolve at least the Raman-scattered light;
a detector that detects spectrally resolved light;
a movable reflecting mirror that is disposed in an optical path of the Rayleigh-scattered light and the Raman-scattered light transmitted through the rejection filter, the movable reflecting mirror being switchable between a state of intersecting the optical path at a predetermined angle during observation of a surface of the sample and a state of being retracted from the optical path during non-observation;
a second beam splitter;
an illumination lamp that emits illumination light for observation of the surface of the sample, the illumination lamp being configured to emit the illumination light such that the illumination light is reflected by the second beam splitter and by the movable reflecting mirror, is transmitted through the rejection filter and the objective lens, and irradiates the sample;
an observation camera that photographs reflected light, the reflected light being the illumination light reflected by the sample, representing a shape of the surface of the sample, and having propagated backward to the second beam splitter and having been transmitted therethrough; and
a personal computer (PC) that performs overall required control of the apparatus,
**characterized in that** the AF control unit is disposed in a reflection direction in which the monochromatic excitation light beam reflected or scattered by the sample propagates backward to the first beam splitter, and is reflected by the first beam splitter toward the AF control unit.

2. A laser Raman microscope comprising:
a laser oscillator that emits monochromatic excitation light beam;
an alignment mirror that is disposed in such a manner as to intersect an optical path at a predetermined angle and that finely adjusts an optical path of the monochromatic excitation light beam emitted from the laser oscillator, the monochromatic excitation light beam being incident upon and reflected by the alignment mirror;
a first beam splitter that is disposed in such a manner as to intersect, at a predetermined angle, the optical path of the monochromatic excitation light beam reflected by the alignment mirror;
a rejection filter which is to be disposed at a predetermined position to intersect, at a predetermined angle, an optical path located downstream of the first beam splitter, the rejection filter having a predetermined high reflectance corresponding to a wavelength of the monochromatic excitation light beam emitted from the laser oscillator wherein the monochromatic excitation light beam reflected by the alignment mirror is transmitted through the first beam splitter, is reflected by the rejection filter in a direction in which a sample is irradiated with the monochromatic excitation light beam;
an objective lens that is disposed along an optical path of the monochromatic excitation light beam reflected by the rejection filter, the objective lens collecting the monochromatic excitation light beam reflected by the rejection filter irradiating the monochromatic excitation light beam onto the sample positioned at a focal point;
a composite stage device on which the sample is positioned, the composite stage device including an XY stage and a Z stage;
an autofocus (AF) control unit which is configured to perform necessary computation to calculate a positional deviation between a focus of the objective lens and the sample and configured to move the Z stage up or down to correct the positional deviation;
a spectrometer into which Rayleigh-scattered light and Raman-scattered light included in light from the sample are guided, the light being transmitted through the rejection filter upon incidence of the monochromatic excitation light beam on the sample, the spectrometer being configured to spectrally resolve at least the Raman-scattered light;
a detector that detects spectrally resolved light;
a movable reflecting mirror that is disposed in an optical path of the Rayleigh-scattered light and the Raman-scattered light transmitted through the rejection filter, the movable reflecting mirror being switchable between a state of intersecting the optical path at a predetermined angle during observation of a surface of the sample and a state of being retracted from the optical path during non-observation;
a second beam splitter;
an illumination lamp that emits illumination light for observation of the surface of the sample, the illumination lamp being configured to emit the illumination light such that the illumination light is reflected by the second beam splitter and by the movable reflecting mirror, is transmitted through the rejection filter and the objective lens, and irradiates the sample;
an observation camera that photographs reflected light, the reflected light being the illumination light reflected by the sample, representing a shape of the surface of the sample, and having propagated backward to the second beam splitter and having been transmitted therethrough; and
a connection port with a personal computer (PC) that performs overall required control of the apparatus,
**characterized in that** the AF control unit is disposed in a reflection direction in which the monochromatic excitation light beam reflected or scattered by the sample propagates backward to the first beam splitter, and is reflected by the first beam splitter toward the AF control unit.

3. The laser Raman microscope according to Claim 2,
Wherein the laser oscillator includes a plurality of laser oscillator units, each of which emits a monochromatic excitation light beam having a different wavelength.

4. The laser Raman microscope according to Claim 3,
Wherein the rejection filter includes a plurality of rejection filter units each of which is configured to have a reflectance corresponding to the wavelength of the monochromatic excitation light beam corresponding to each of the plurality of laser oscillator units, and
wherein one of the laser oscillator units selected from the plurality of laser oscillator units is configured to emit a monochromatic excitation light beam, and one of the rejection filter units is selected one-to-one to correspond to the laser oscillator unit, and the selected rejection filter unit can be moved alternately to the predetermined position.

5. The laser Raman microscope according to Claim 4,
Wherein the plurality of rejection filter units are arranged on a movable table.

6. The laser Raman microscope according to Claim 3,
wherein the plurality of laser oscillator units are fixedly arranged, and the monochromatic excitation light beam emitted from a selected one of the plurality of laser oscillator units is incident on the alignment mirror along a common optical path via a plurality of mirrors.

7. The laser Raman microscope according to Claim 3,
Wherein the plurality of laser oscillator units are arranged on the movable table,
Wherein one of the plurality of laser oscillator units is selected by scanning the movable table and is moved to an emission position, and
Wherein the monochromatic excitation light beam emitted from the selected laser oscillator is incident on the alignment mirror along a common optical path.

8. The laser Raman microscope according to any one of Claims 2-7,
Wherein the AF control unit is configured to calculate the positional deviation between the focus of the objective lens and the sample by using any one of a pupil-splitting method, a knife-edge method, a pinhole method based on optical path difference, a Foucault method, a critical-angle method, a phase-difference method, and an astigmatism method.

9. The laser Raman microscope according to any one of Claims 2-7,
Wherein the AF control unit includes a blade, a lens, a detector, a calculation unit, and a motor driver,
Wherein the blade partially blocks a light beam,
Wherein the calculation unit performs necessary computation based on a detection position of the monochromatic excitation light beam on the detector to calculate a positional deviation between the focus of the objective lens and the sample, and
Wherein the Z stage is driven by the motor driver to move up or down to correct the positional deviation.

10. The laser Raman microscope according to any one of Claims 2-9,
Wherein the spectrometer is configured to spectrally resolve the Raman-scattered light using a diffraction grating, a filter, or Fourier transform.

11. The laser Raman microscope according to any one of Claims 2-10, further comprising:
means for controlling a distance between the sample and the objective lens, the means being capable of complementing a control range of the AF control unit.

12. The laser Raman microscope apparatus according to Claim 1,
Wherein the laser oscillator includes a plurality of laser oscillator units, each of which emits a monochromatic excitation light beam having a different wavelength.

13. The laser Raman microscope apparatus according to Claim 12,
Wherein the rejection filter includes a plurality of rejection filter units each of which is configured to have a reflectance corresponding to the wavelength of the monochromatic excitation light beam corresponding to each of the plurality of laser oscillator units and wherein one of the laser oscillator units selected from the plurality of laser oscillator units is configured to emit a monochromatic excitation light beam, and one of the rejection filter units is selected one-to-one to correspond to the laser oscillator unit, and the selected rejection filter unit can be moved alternately to the predetermined position.

14. The laser Raman microscope apparatus according to any one of Claims 1, 12, or 13,
Wherein the AF control unit is configured to calculate the positional deviation between the focus of the objective lens and the sample by using any one of a pupil-splitting method, a knife-edge method, a pinhole method based on optical path difference, a Foucault method, a critical-angle method, a phase-difference method, and an astigmatism method.

15. The laser Raman microscope apparatus according to any one of Claims 1, 12, or 13,
Wherein the AF control unit includes a blade, a lens, a detector, a calculation unit, and a motor driver,
Wherein the blade partially blocks a light beam,
Wherein the calculation unit performs necessary computation based on a detection position of the monochromatic excitation light beam on the detector to calculate a positional deviation between the focus of the objective lens and the sample, and
Wherein the Z stage is driven by the motor driver to move up or down to correct the positional deviation.
